(19) Europäisches Patentamt
European Patent Office
Office européen des brevets

(11) EP 4 130 106 A1

(12) **EUROPEAN PATENT APPLICATION**
published in accordance with Art. 153(4) EPC

(43) Date of publication:
**08.02.2023 Bulletin 2023/06**

(21) Application number: **21774740.1**

(22) Date of filing: **23.03.2021**

(51) International Patent Classification (IPC):
***C08J 5/04*** *(1974.07)* ***B29C 65/54*** *(1985.01)*
***C08J 5/12*** *(1974.07)* ***C08J 7/00*** *(1974.07)*
***B29K 105/06*** *(1985.01)*

(52) Cooperative Patent Classification (CPC):
**B29C 65/54; C08J 5/04; C08J 5/12; C08J 7/00**

(86) International application number:
**PCT/JP2021/011938**

(87) International publication number:
**WO 2021/193609 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2020 JP 2020052238**

(71) Applicant: **Mitsubishi Chemical Corporation**
**Chiyoda-ku**
**Tokyo 100-8251 (JP)**

(72) Inventors:
- **FURUHASHI, Yuma**
  **Tokyo 100-8251 (JP)**
- **HAYASHI, Takahiro**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) FIBER-REINFORCED COMPOSITE MATERIAL AND BONDED BODY

(57) This invention relates to a fiber-reinforced composite material including a matrix resin, and reinforcing fibers, in which the matrix resin includes a polyaryl ketone resin and a resin having a nitrogen atom in a repeating structural unit and a surface of the fiber-reinforced composite material includes a portion in which a contact angle with water is 60° or less.

EP 4 130 106 A1

## Description

[Technical Field]

The present invention relates to a fiber-reinforced composite material.

Priority is claimed on Japanese Patent Application No. 2020-052238, filed March 24, 2020, the content of which is incorporated herein by reference.

[Background Art]

Polyaryl ketone resins as typified by polyether ether ketone resin (also referred to below as "PEEK" resin) have excellent heat resistance, flame retardance, hydrolysis resistance, chemical resistance, and the like and are thus widely used, in particular, in aircraft parts and electrical and electronic parts. However, the raw material prices of polyaryl ketone resins are very expensive and the glass transition temperature of the resin itself is comparatively low at approximately 140°C to 170°C, thus, various studies on improving the heat resistance thereof have been carried out. Among the above, blending with polyetherimide resin has attracted attention as a technique that exhibits favorable compatibility with polyaryl ketone resins and a fiber-reinforced composite article has been proposed in which a matrix resin including polyaryl ketone resin and polyetherimide resin is used to improve interfacial adhesion between the reinforcing fibers and the matrix resin (Patent Document 1).

Polyaryl ketone resins have excellent chemical resistance, but on the other hand, polyaryl ketone resins have a large contact angle with water and low affinity for various adhesives. Therefore, fiber-reinforced composite articles using a polyaryl ketone resin as a matrix resin are difficult to bond to adherends such as fiber-reinforced composite articles, resin materials, and metal materials and various bonding studies have been carried out.

A method was proposed to reduce the contact angle and significantly improve the adhesive strength by carrying out a plasma treatment on bonded parts (Patent Document 2). In the technique described in Patent Document 2, bonding is achieved by increasing the temperature to a specific temperature and applying pressure between materials with a greatly reduced contact angle.

[Citation List]

[Patent Documents]

[Patent Document 1]
PCT International Publication No. WO 2019/168009
[Patent Document 2]
Japanese Unexamined Patent Application, First Publication No. 2019-188789

[Summary of Invention]

[Technical Problem]

In a case of bonding materials with increased temperatures, there were problems as described in (1) to (3) below.

(1) When parts with significantly different melting points are bonded together, the melting of the part formed of a material with a higher melting point may be insufficient and the bonding strength may be decreased; (2) when parts formed of metal materials and parts formed of composite materials are bonded at high temperatures, the linear expansion coefficients are significantly different such that residual stress occurs inside the bonded body after heating and cooling; and (3) for large parts, it is necessary to heat all of the parts even when a local bond is desired. When parts formed of materials including polyaryl ketone resin were bonded to other parts using adhesives at low temperatures, it was difficult to increase the bonding strength.

The present invention was created in view of the circumstances described above and has an object of providing a fiber-reinforced composite material suitable for localized bonding.

[Solution to Problem]

One aspect of the present invention is [1] to [41] below.

[1] A fiber-reinforced composite material including a matrix resin, and reinforcing fibers, in which the matrix resin includes a polyaryl ketone resin and a resin having a nitrogen atom in a repeating structural unit and a surface of the fiber-reinforced composite material includes a portion in which a contact angle with water measured in accordance with JISR 3257 is 60° or less.
[2] The fiber-reinforced composite material according to [1], in which the resin having a nitrogen atom in a repeating structural unit comprises a polyetherimide resin.
[3] The fiber-reinforced composite material according to [1] of [2], in which the polyaryl ketone resin comprises a polyether ether ketone resin.
[4] The fiber-reinforced composite material according to any one of [1] to [3], in which the contact angle is 35° or less.
[5] The fiber-reinforced composite material according to any one of [1] to [4], in which a ratio of the polyaryl ketone resin to the resin having a nitrogen atom in a repeating structural unit is 4 or more and 32 or less as a mass ratio (polyaryl ketone resin/resin having a nitrogen atom in a repeating structural unit).
[6] The fiber-reinforced composite material according to any one of [1] to [5], in which a CAI strength of the fiber-reinforced composite material is 300 MPa or higher, G1c and G2c are each 1.0 $kJ/m^2$ or more, and Tg is 150°C or higher.
[7] The fiber-reinforced composite material according to any one of [1] to [6], in which the reinforcing fibers comprise carbon fibers.
[8] The fiber-reinforced composite material according to any one of [1] to [7], in which the fiber-reinforced composite material is a molded article.
[9] The fiber-reinforced composite material according to any one of [1] to [8], in which the contact angle is preferably 5° or more and 50° or less and more preferably 5° or more and 35° or less.
[10] The fiber-reinforced composite material according to any one of [1] to [9], in which, in the portion, when yd is surface free energy of a non-polar component (after surface treatment), yd0 is surface free energy of an initial value of the non-polar component (before surface treatment), yp is surface free energy of a polar component (after surface treatment), and γp0 is surface free energy of an initial value of the polar component (before surface treatment), γd/γd0 = 0.5 to 2.0 and γp/γp0 = 0.8 to 50 are satisfied.
[11] The fiber-reinforced composite material according to any one of [1] to [10], in which a CAI strength is preferably 300 MPa or higher and 800 MPa or less and more preferably 330 MPa or higher and 800 MPa or less.
[12] The fiber-reinforced composite material according to any one of [1] to [11], in which G1c is preferably 1.0 $kJ/m^2$ or more and 3.0 $kJ/m^2$ or less and more preferably 1.2 $kJ/m^2$ or more and 3.0 $kJ/m^2$ or less and G2c is preferably 1.0 $kJ/m^2$ or more and 3.0 $kJ/m^2$ or less and more preferably 1.2 $kJ/m^2$ or more and 3.0 $kJ/m^2$ or less.
[13] The fiber-reinforced composite material according to any one of [1] to [12], in which a glass transition temperature (Tg) is preferably 150°C or higher and 500°C or lower and more preferably 160°C or higher and 500°C or lower.
[14] The fiber-reinforced composite material according to any one of [1] to [13], in which the reinforcing fibers are a reinforcing fiber substrate in which the fibers are aligned in one direction and a thickness of the reinforcing fiber substrate is preferably 0.04 to 0.70 mm and more preferably 0.07 to 0.40 mm.
[15] The fiber-reinforced composite material according to any one of [1] to [14], in which a volume content ratio of the reinforcing fibers (Vf) is preferably 20% to 75% with respect to a volume of the fiber-reinforced composite material and more preferably 40% to 65%.
[16] The fiber-reinforced composite material according to any one of [1] to [15], in which a volume content ratio of the matrix resin (Vr) is preferably 25% to 80% with respect to the volume of the fiber-reinforced composite material and more preferably 35% to 60%.
[17] The fiber-reinforced composite material according to any one of [1] to [16], in which the mass ratio represented by [the polyaryl ketone resin/the resin having a nitrogen atom in a repeating structural unit] is preferably 4 or more and 32 or less and more preferably 4 or more and 30 or less.
[18] The fiber-reinforced composite material according to any one of [1] to [17], in which a melt volume rate (MVR; set temperature: 380°C, load: 5 kg) of the polyaryl ketone resin measured in accordance with ISO 1133 is preferably 1 to 80 $cm^3/10$ min and more preferably 10 to 50 $cm^3/10$ min.
[19] The fiber-reinforced composite material according to any one of [1] to [18], in which the polyaryl ketone resin comprises a polyether ether ketone having a structural unit represented by Formula (1).

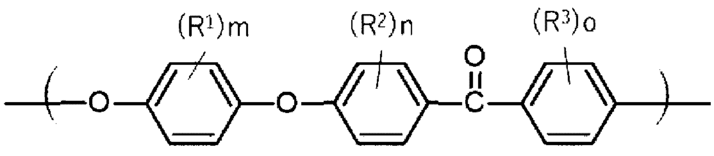

(1)

(In Formula (1), $R^1$ to $R^3$ each independently represents a halogen atom, an alkyl group, or an alkoxy group, and m, n, and o each independently represents an integer of 0 to 4.)

[20] The fiber-reinforced composite material according to [19], in which a ratio of the structural unit represented by Formula (1) in the polyether ether ketone resin (100% by mass) is preferably 70% by mass to 100% by mass, more preferably 80% by mass to 100% by mass, and even more preferably 90% by mass to 100% by mass.

[21] The fiber-reinforced composite material according to any one of [1] to [20], in which the resin having a nitrogen atom in a repeating structural unit comprises a polyetherimide resin and a melt volume rate (MVR; set temperature: 360°C, load: 5 kg) of the polyetherimide resin measured in accordance with ISO 1133 is preferably 5 to 50 $cm^3/10$ min.

[22] The fiber-reinforced composite material according to [21], in which the polyetherimide resin has a repeating unit represented by Formula (2).

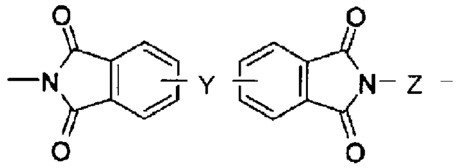

(2)

(In Formula (2), Y represents a divalent group having an -O- or ether bond. Z represents an arylene group which may have a substituent.)

[23] The fiber-reinforced composite material according to [22], in which the divalent group having an ether bond is selected from the groups represented below.

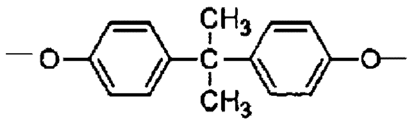

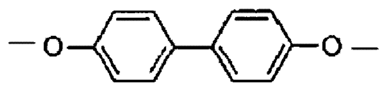

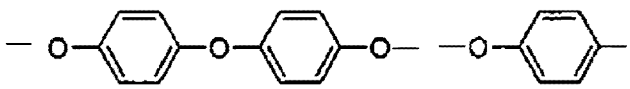

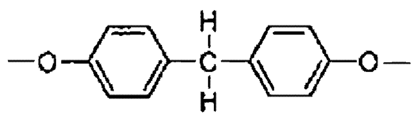

[24] The fiber-reinforced composite material according to any one of [21] to [23], in which the polyetherimide resin has a structural unit represented by Formula (3) or (4).

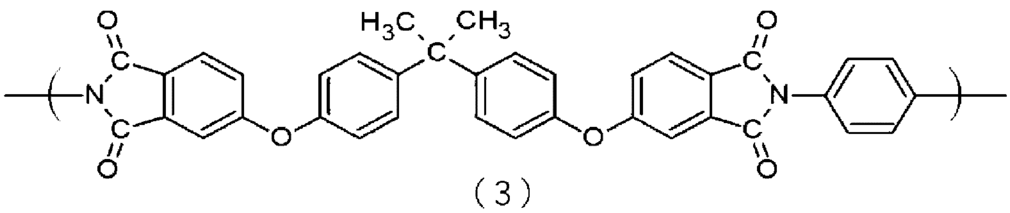

(3)

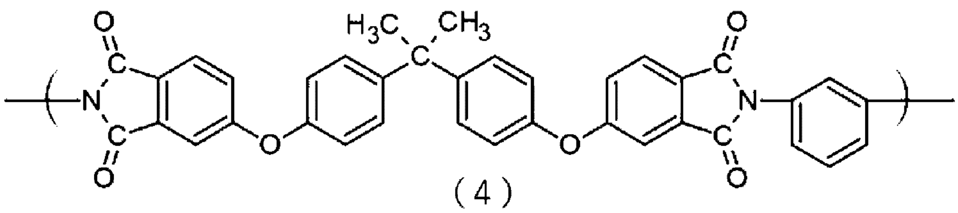

(4)

[25] A bonded body between a part 1 and a part 2, wherein the part 1 is formed of a fiber-reinforced composite article including carbon fibers and thermoplastic resin, the bonded body including a bonding portion where the part 1 and the part 2 are bonded via an adhesive, in which at least a part of a fracture surface at the bonding portion of the bonded body after tensile testing in accordance with JISK 6850 is a cohesion failure of the adhesive.

[26] The bonded body according to [25], in which the part 2 is formed of metal.
[27] The bonded body according to [26], in which the bonding portion includes an epoxy-based adhesive.
[28] The bonded body according to [25], in which the part 2 is formed of a fiber-reinforced composite article.
[29] The bonded body according to [28], in which the bonding portion includes a urethane-based adhesive.
[30] The bonded body according to [25], in which the part 2 is formed of a resin material.
[31] The bonded body according to [30], in which the bonding portion includes an acrylic-based adhesive.
[32] The bonded body according to any one of [25] to [31], in which the thermoplastic resin includes a polyaryl ketone resin.
[33] The bonded body according to [25], in which the part 1 formed of the fiber-reinforced composite article is the fiber-reinforced composite material according to any one of [1] to [24].
[34] A method for manufacturing a fiber-reinforced composite material including a polyaryl ketone resin, a polyetherimide resin, and reinforcing fibers, the method including carrying out a plasma treatment on a surface of the fiber-reinforced composite material.
[35] The method for manufacturing a fiber-reinforced composite material according to [34], in which, in the plasma treatment, at least a part of the surface of the fiber-reinforced composite material is irradiated with plasma such that a contact angle with water is 60° or less.
[36] The method for manufacturing a fiber-reinforced composite material according to [34] or [35], in which the fiber-reinforced composite material is the fiber-reinforced composite material according to any one of [1] to [24].
[37] A bonded body between a part 1 and a part 2, wherein the part 1 is formed of a fiber-reinforced composite article including carbon fibers and thermoplastic resin, the bonded body including a bonding portion where the part 1 and the part 2 are bonded via an epoxy-based adhesive, in which an adhesive strength at the bonding portion is 25 MPa or higher.
[38] A bonded body between a part 1 and a part 2, wherein the part 1 is formed of a fiber-reinforced composite article including carbon fibers and thermoplastic resin, the bonded body including a bonding portion where the part 1 and the part 2 are bonded via an adhesive, in which a cohesion failure ratio of a fracture surface at the bonding portion of the bonded body after tensile testing in accordance with JISK 6850 is 70% or more.
[39] The bonded body according to [37] or [38], in which the adhesive strength at the bonding portion is preferably 25 MPa or higher and 100 MPa or less and more preferably 28 MPa or higher and 100 MPa or less.
[40] The bonded body according to any one of [37] to [39], in which a cohesion failure ratio of a fracture surface at the bonding portion of the bonded body after tensile testing in accordance with JISK 6850 is 70% or more and 100% or less.
[41] The bonded body according to any one of [37] to [40], in which the part 1 formed of a fiber-reinforced composite article is the fiber-reinforced composite material according to any one of [1] to [24].

[Advantageous Effects of Invention]

According to an aspect of the present invention, it is possible to provide a fiber-reinforced composite material with surface properties suitable for bonding. In addition, in particular, it is possible to provide a fiber-reinforced composite material with excellent adhesion to adherends of a fiber-reinforced composite article, a resin material, and a metal material, as well as a strongly adhered bonded body.

[Description of Embodiments]

[Fiber-Reinforced Composite Material]

The fiber-reinforced composite material includes a matrix resin and reinforcing fibers and the matrix resin includes a polyaryl ketone resin and a resin having a nitrogen atom in a repeating structural unit. The fiber-reinforced composite material may be a prepreg or may be a molded article. The surface of the fiber-reinforced composite material includes a portion (A) with a contact angle with water of 60° or less. The portion (A) with a contact angle of 60° or less is a portion where, when water is dropped onto the fiber-reinforced composite material surface and the contact angle is measured by the $\theta/2$ method using a contact angle meter in accordance with JISR 3257, the contact angle is 60° or less, and which may be arranged at any position in the fiber-reinforced composite material. The portion (A) is preferably arranged at a portion adhered to the adherend. It is possible to form the portion (A), for example, by surface treatment of the fiber-reinforced composite material including a polyaryl ketone resin and a resin having a nitrogen atom in a repeating structural unit, using a plasma irradiation method, a corona discharge irradiation method, or the like. In the portion (A) in the fiber-reinforced composite material, it is considered that functional groups such as hydroxyl groups are present on the surface due to changes in the molecular structure of the matrix resin. By blending the resin having a nitrogen atom in a repeating structural unit with the polyaryl ketone resin, nitrogen-derived bonds are present in the

matrix resin, thus, when the adherend and portion (A) are adhered using an adhesive or the like, it is possible to carry out the adhesion strongly since more types of chemical bonds occur between the matrix resin and the adhesive than with the polyaryl ketone resin alone. From the viewpoint that it is possible to sufficiently attach the adhesive to the adherend to suppress interface failure between the adhesive and the adherend, a contact angle of 50° or less is preferable, 35° or less is more preferable, and 25° or less is even more preferable. From the viewpoint of strengthening the bond between the fiber-reinforced composite material and other parts, 5° or more is preferable. Regarding the surface free energy of the portion (A), when γd is a non-polar component, γd0 is the initial value of the non-polar component (untreated), γp is a polar component, and γp0 is the initial value of the polar component (untreated), from the viewpoint of bonding strength, $\gamma d/\gamma d0 = 0.5$ to 2.0 and $\gamma p/\gamma p0 = 0.8$ to 50 is preferable. The portion (A) preferably has a contact angle with respect to diiodomethane of 60° or less and more preferably 50° or less, since the bonding strength is improved when using adhesives. From the viewpoint of impact resistance when used in structural materials, the CAI strength of the fiber-reinforced composite material is preferably 300 MPa or higher and more preferably 330 MPa or higher. The CAI may be800 MPa or less. It is possible to measure the CAI strength by the method in accordance with SACMA SRM 2R. From the viewpoint of interlaminar toughness when used in structural materials, the energy release rates G1c and G2c are each preferably 1.0 $kJ/m^2$ or more and more preferably 1.2 $kJ/m^2$ or more. G1c and G2c are each may be 3.0 $kJ/m^2$ or less. It is possible to measure G1c and G2c by the methods in accordance with ASTM D5528 and BMS 8-276, respectively. From the viewpoint of the heat resistance of the structural material, Tg is preferably 150°C or higher, and more preferably 160°C or higher. Tg may be 500°C or less.

(Reinforcing Fibers)

Examples of the form of reinforcing fibers used in the fiber-reinforced composite material include a form where fibers are aligned in one direction to form a reinforcing fiber substrate or the form of a woven fiber-reinforced substrate such as plain weave, twill weave, or satin weave. From the viewpoint of strength when made into a molded article, the fibers are preferably in the form of a reinforcing fiber substrate with fibers aligned in one direction. In addition, from the viewpoint of resin impregnation, the thickness of the reinforcing fiber substrate is preferably 0.04 to 0.70 mm and more preferably 0.07 to 0.40 mm. In order to achieve a high elastic modulus or high strength of the molded article, the volume content ratio of the reinforcing fibers (Vf) in the fiber-reinforced composite material is preferably 20% to 75% with respect to the volume of the fiber-reinforced composite material and more preferably 40% to 65%.

As reinforcing fibers, it is possible to use fibers formed of inorganic fibers, metal fibers, or mixtures thereof. Examples of inorganic fibers include carbon fibers, graphite fibers, silicon carbide fibers, alumina fibers, tungsten carbide fibers, boron fibers, glass fibers, and the like. As metal fibers, it is possible to use fibers of stainless steel, iron, and the like, as well as carbon fibers coated with metal, or the like. Carbon fibers are particularly preferable. Examples of carbon fibers include polyacrylonitrile (PAN)-based fibers, petroleum and coal pitch-based fibers, rayon-based fibers, lignin-based fibers, and the like. In particular, in PAN-based carbon fibers in which PAN is the raw material, strands or tows of 12,000 to 60,000 filaments have excellent productivity and mechanical properties on an industrial scale, which is preferable.

(Matrix Resin)

The matrix resin includes polyaryl ketone resin and a resin having a nitrogen atom in a repeating structural unit. By mixing the polyaryl ketone resin with a resin having a nitrogen atom in a repeating structural unit, it is possible to reduce the contact angle while creating a plurality of types of chemical bonds between the matrix resin and the adhesive, thus, it is possible to develop surface properties suitable for bonding. From the viewpoint of high elastic modulus or strength, the volume content ratio of the matrix resin (Vr) in the fiber-reinforced composite material is preferably 25% to 80% with respect to the volume of the fiber-reinforced composite material and more preferably 35% to 60%.

To increase the stability with respect to solvents, the mixing ratio of the polyaryl ketone resin and the resin having a nitrogen atom in a repeating structural unit is preferably a mass ratio (polyaryl ketone resin/resin having a nitrogen atom in a repeating structural unit) of 3 or more and more preferably 4 or more. Since it is possible to improve the adhesion to the reinforcing fibers, a mass ratio (polyaryl ketone resin/polyetherimide resin) of 32 or less is preferable and 30 or less is more preferable.

(Polyaryl ketone Resin)

Polyaryl ketone resins are thermoplastic resins including aromatic rings, ketones, and ether bonds in the structural units thereof and examples thereof include polyether ketone, polyether ether ketone, polyether ketone ketone, and the like. As the viscosity of polyaryl ketones, from the viewpoint of improving strength, the melt volume rate (MVR; set temperature: 380°C, load: 5 kg) measured in accordance with ISO 1133 is preferably 1 to 80 $cm^3/10$ min, and, from the

viewpoint of ease of impregnation, the melt volume rate (MVR; set temperature: 380°C, load: 5 kg) measured in accordance with ISO 1133 is preferably 10 to 50 $cm^3$/10 min. In addition, substituents may be present to the extent that the effect of the present invention is not impaired. Polyether ether ketone having a structural unit represented by Formula (1) is preferable from the viewpoints of moldability, chemical resistance, and the like.

(In Formula (1), $R^1$ to $R^3$ each independently represents a halogen atom, an alkyl group, or an alkoxy group, and m, n, and o each independently represents an integer of 0 to 4.)

$R^1$ to $R^3$ represent halogen atoms, alkyl groups of alkoxy groups, examples of halogen atoms include fluorine, chlorine, bromine, iodine, and the like, examples of alkyl groups include methyl groups, ethyl groups, propyl groups, and the like, and examples of alkoxy groups include methoxy groups, ethoxy groups, butoxy groups, and the like. m, n, and o are preferably 0. The ratio of structural units represented by Formula (1) in the polyether ether ketone resin (100% by mass) is preferably 70% by mass to 100% by mass, more preferably 80% by mass to 100% by mass, and even more preferably 90% by mass to 100% by mass. It is possible to use commercially available polyether ether ketone as the polyether ether ketone, for example, trade name "VESTAKEEP (registered trademark, the same applies below) 3300G", manufactured by Polyplastics-Evonik Corporation, "VESTAKEEP JZV7402", "VESTAKEEP 1000G", and the like.

(Resins having Nitrogen Atom in Repeating Structural Unit)

Examples of resins having a nitrogen atom in a repeating structural unit include polyamide resins, polyimide resins, polyurethane resins, and polyetherimide resins. Polyetherimide resins are preferable from the viewpoint of strength and heat resistance. Since the above are used in combination with polyaryl ketone resins, which are thermoplastic resins, the resins having a nitrogen atom in a repeating structural unit are preferably thermoplastic resins. Polyetherimide resins are thermoplastic resins including aliphatic chains or aromatic rings, ether bonds, and imide bonds. As the viscosity of the polyetherimide resin, the melt volume rate (MVR; set temperature: 360°C, load: 5 kg) measured in accordance with ISO 1133 is preferably 5 to 50 $cm^3$/10 min and, from the viewpoint of mechanical properties, 10 to 30 $cm^3$/10 min is more preferable. Substituents may be present to the extent that the effect of the present invention is not impaired. It is preferable to have a repeating unit represented by Formula (2).

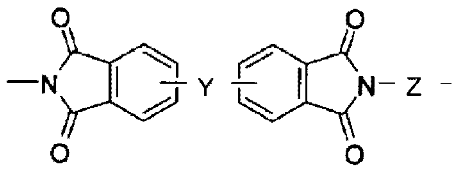

(2)

(In Formula (2), Y represents a divalent group having an -O- or ether bond. Z represents an arylene group which may have a substituent.)

Examples of arylene groups include phenylene groups, naphthylene groups, biphenylene groups, and the like. Examples of divalent groups having ether bonds include the groups shown below.

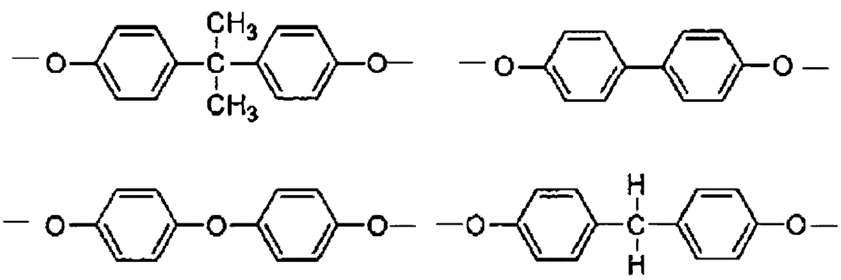

Due to being easier to mix with polyaryl ketone resins, polyetherimide resins having a structural unit represented by Formula (3) or (4) below are preferably used. Examples of commercially available products thereof include trade names "Ultem 1000", "Ultem CRS1010", "Ultem CRS5011", "Ultem CRS5001", and the like, manufactured by SABIC.

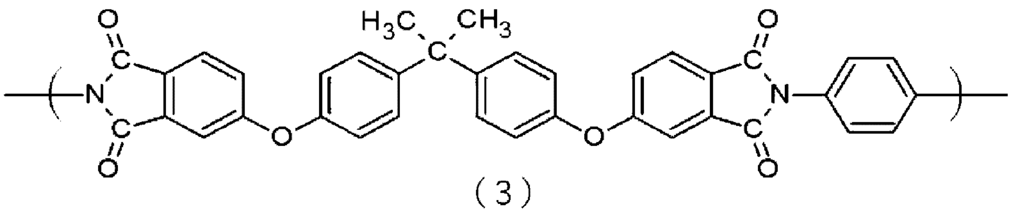

(3)

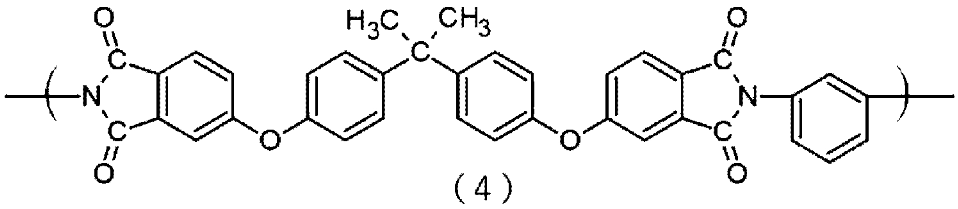

(4)

(Other Additives)

To the extent that the properties thereof are not impaired, the matrix resin may be blended as appropriate with various additives other than other resins and inorganic fillers, such as heat stabilizers, UV absorbers, light stabilizers, nucleating agents, colorants, lubricants, and flame retardants. In addition, as the mixing method of the various additives, it is possible to use known methods.

(Prepreg)

A prepreg is obtained by impregnating a reinforcing fiber substrate with a matrix resin and examples of the forms thereof include a UD prepreg, a cross prepreg, a sheet molding compound, and the like. It is possible to make a prepreg into a molded article by forming and molding a laminate laminated at various angles according to the application. Examples of laminate configurations include unidirectional materials, orthogonal lamination, and quasi-isotropic lamination. In order to mold complex shapes with high precision, it is possible to make the prepreg into a cut prepreg by carrying out a cutting process or into a random sheet with rectangular-shaped or parallelogram-shaped chopped strands in which the chopped strands are isotropically or anisotropically dispersed at random. It is possible to improve the adhesive strength of the bonding portion of the bonded body, for example, by adjusting the contact angle of the bonding portion in the combinations of prepreg and prepreg, prepreg and molded article, and molded article and molded article.

The molding method is not particularly limited and it is possible to laminate one or a plurality of sheets of prepreg and carry out the molding using a metal mold press method, an autoclave method, a hot or cold press method, an automatic laminating method utilizing robots, or the like.

(Surface Treatment)

Examples of surface modification methods using a surface treatment include wet treatments and dry treatments. A wet treatment is a modification method in which reaction products are deposited on the surface of the substrate by various chemical reactions in a liquid phase and examples thereof include treatments with an aqueous solution and the like. Examples of dry treatments include corona treatment, flame treatment, and plasma treatment. A corona treatment is a treatment that irradiates a corona discharge and enables high-speed treatment. A flame treatment uses a flame to enable treatment without tracing the unevenness of products with three-dimensional unevenness. A plasma treatment is a treatment of a region close to the surface of the material surface layer for which a drying step is not necessary and therefore there is less damage to the material and it is a method which enables treatment with compact equipment.

(Plasma Treatment)

A plasma treatment is a treatment which modifies the surface state by reacting oxygen radicals and nitrogen radicals generated by dry air entering a plasma state through discharge energy with the fiber-reinforced composite material surface. Due to this, it is possible to decrease the contact angle with water. Examples of plasma treatments include the method described below. The fiber-reinforced composite material which is the target to be surface-modified is fixed on a movable pedestal. A plasma irradiation nozzle is installed within the movable range of the pedestal and fixed at a position separated from the surface of fiber-reinforced composite material by 1 to 500 mm. By running the power to generate the plasma, the surface of the fiber-reinforced composite material is irradiated with the plasma

discharged from the injection holes of the plasma irradiation nozzle while the movable pedestal on which the fiber-reinforced composite material is fixed is moved at a speed of 1 mm/sec to 500 mm/sec. It is possible to modify the surface by setting the temperature near the plasma irradiation nozzle injection holes to 100°C to 500°C and carrying out irradiation for 0.002 to 500 seconds. The closer the separation distance between the injection holes of the plasma irradiation nozzle and the fiber-reinforced composite material and the slower the movement speed of the pedestal, the stronger the surface modification. The farther the separation distance between the injection holes of the plasma irradiation nozzle and the fiber-reinforced composite material and the faster the movement speed of the pedestal, the weaker the surface modification effect.

(Adhesive)

It is possible to use adhesives to bond fiber-reinforced composite materials to other parts. The adhesive is preferably at least one selected from epoxy-based adhesives, urethane-based adhesives, and acrylic-based adhesives and, epoxy-based adhesives are more preferable. In addition, the form of the adhesive to be used may be solution-based or film-based and film-based adhesives are preferable from the viewpoint that adhesion is possible with high positional accuracy. The thickness of the introduced adhesive layer is not particularly restricted, but is preferably 0.01 to 30 mm.

(Bonded Body)

The bonded body is preferably a bonded body between the part 1 formed of a fiber-reinforced composite article including carbon fibers and thermoplastic resin and the part 2, the bonded body including a bonding portion where the part 1 and the part 2 are bonded via an adhesive, in which at least a part of the fracture surface at the bonding portion after tensile testing of the bonded body is a cohesion failure of the adhesive. It is possible for the fiber-reinforced composite article to be a material forming a fiber-reinforced composite material as described previously. Cohesion failure means a failure occurring inside the visible apparently layer. It is possible for the part 1 to be the fiber-reinforced composite material described previously. For example, cohesion failure of the adhesive occurs after tensile testing in a case of a bonded body where the part 1, which was surface modified by the plasma treatment described above, and the part 2, which may be identical to the part 1, are bonded via an adhesive. Examples of the material of the part 2 include a fiber-reinforced composite article, a resin material, or a metal material. Epoxy-based adhesives are preferably used when the part 2 is formed of metal material, urethane-based adhesives are preferably used when part 2 is formed of a fiber-reinforced composite article, and acrylic-based adhesives are preferably used when the part 2 is formed of a resin material. From the viewpoint of further improving adhesion to the surface-modified part 1, a plasma treatment may be carried out on the part 2 before bonding to the part 1. As another form, it is possible to have a bonded body between the part 1 formed of a fiber-reinforced composite article including carbon fibers and thermoplastic resin and the part 2, the bonded body including a bonding portion where the part 1 and the part 2 are bonded via an epoxy-based adhesive, in which an adhesive strength at the bonding portion is 25 MPa or higher. It is possible to measure the adhesive strength by tensile testing. From the viewpoint of the strength of the entire bonded body, an adhesive strength of 28 MPa or higher is preferable. It is possible for the adhesive strength to be 100 MPa or less.

(Cohesion Failure Ratio of Adhesive)

The cohesion failure ratio of an adhesive after tensile testing in accordance with JISK 6850 is the ratio of failure within the adhesive with respect to the total adhesive area. A higher cohesion failure ratio means a greater ratio of the adhesive which fails within the adhesive, and it shows that the adhesive function of the adhesive is able to be expressed. Even when incorporated into a structural body such as a car or aircraft, it is possible to prevent the bonding portion from failing due to external impacts. It is possible to obtain the cohesion failure ratio by calculating the area ratio by observation with the naked eye or microscopic observation or by calculating the area ratio by image processing. The cohesion failure ratio in the adhesive, which is calculated by photographing the fracture surface after tensile testing and binarizing the photographed image using image processing software, is preferably 10% or more, more preferably 50% or more, and even more preferably 70% or more.

[Examples]

Below, Examples will be illustrated and a more detailed description will be given of embodiments of the present invention, but the present invention is not limited by the following Examples.

In the Present Example, a fiber-reinforced thermoplastic resin prepreg was used in which a thermoplastic resin composition in which a PEEK resin, which is a polyaryl ketone resin, (trade name "VESTAKEEP (registered trademark)

3300G manufactured by Polyplastics-Evonik Corporation", MVR; set temperature: 380°C, load: 5 kg at 20 $cm^3$/10 min, having a structure represented by Formula (1), in which m, n, and o are 0), and a polyetherimide resin (trade name "Ultem (registered trademark) CRS5011" manufactured by Sabic, MVR; set temperature: 360°C, load: 5 kg at 20 $cm^3$/10 min, having a structure represented by Formula (3)) were mixed to have a predetermined mass ratio was heated, melted, and impregnated into a carbon fiber sheet in which carbon fibers (trade name "MR50R" manufactured by Mitsubishi Chemical Corporation, 570 tex, 12,000 strands) were oriented in one direction.

(Example 1)

(Preparation of Molded Plate)

A laminate was produced such that a fiber-reinforced thermoplastic resin prepreg with a mass ratio of PEEK resin to polyetherimide resin of 90:10 was cut to a size of 178 mm × 328 mm and a suitable thickness and laminate configuration were set for each test item. The laminate was arranged in a metal mold made of steel, the metal mold including the laminate was preheated to 340°C in approximately 10 minutes in a pressing device set at 380°C in a heated and cooled two-stage press (50-ton press, manufactured by Shinto Metal Industries, Ltd.), then, compression molding was performed for 30 minutes under molding conditions of 5 MPa. Thereafter, the metal mold was transported to a press board adjusted to a temperature of 80°C and the temperature was lowered to 200°C in approximately 2 minutes to obtain a 180 mm × 330 mm molded plate formed of a fiber-reinforced composite article. The 90° bending strength was 138 MPa, the CAI was 334 MPa, G1c was 1.6 kJ/$m^2$, G2c was 1.7 kJ/$m^2$, and Tg (DMA, E'-onset) was 166°C. The measurements were carried out as follows.

(90° Bending Strength)

Molded products obtained by laminating prepregs in one direction at 0° so as to have a thickness of approximately 2 mm were cut to dimensions of a length (orthogonal direction to the fibers) of 50 mm × a width (parallel direction to the fibers) of 12.7 mm to produce test pieces (2 mm thickness).
A three-point bending test was performed by a method in accordance with ASTM D790 to measure the 90° bending strength.

(CAI)

The prepregs were laminated $[+45°/0°/-45°/90°]_{3s}$ and the obtained molded products were subjected to a test under impact conditions of an impact energy of 6.7 J/mm in accordance with SACMA SRM 2R using an instrumented falling weight impact tester. The compressive strength after the impact test (CAI strength) was measured.

(G1c and G2c)

A molded plate of approximately 3 mm thickness was obtained by laminating the prepreg in one direction at 0° and partially inserting a polyimide film of approximately 10 μm thickness in the central portion of the thickness. A mode I interlaminar failure toughness value (G1c) was measured by a test method in accordance with ASTM D5528. A mode II interlaminar failure toughness value (G2c) was measured from the molded plates by a test method in accordance with BMS 8-276.

Tg (DMA, E'-onset)

Molded products obtained by laminating prepregs in one direction at 0° so as to have a thickness of approximately 2 mm were cut to dimensions of a length (parallel direction to the fibers) of 55 mm × a width (orthogonal direction to the fibers) of 12.7 mm to produce test pieces (2 mm thickness). The glass transition temperature, which indicates heat resistance, was measured by a method in accordance with ASTM D7028.

(Surface Modification by Plasma Treatment)

Molded plates formed of the fiber-reinforced composite article described above were cut into test pieces with a size of 100 mm × 25 mm and subjected to a plasma treatment. As an atmospheric pressure plasma irradiation apparatus, a plasma generator "FG5001" (manufactured by Plasmatreat GmbH) and a plasma nozzle "RD1004" (manufactured by Plasmatreat GmbH) were used.
The test piece was arranged on a movable stage, the distance from the test piece to the plasma nozzle (irradiation

height) was 5 mm, the movement speed of the stage on which the test piece was arranged (substrate movement speed) was 25 mm/sec, a treatment was performed on the surface of the test piece, and a surface-modified test piece was obtained.

(Measurement of Contact Angle)

Using a portable contact angle meter PCA-11 (manufactured by Kyowa Interface Science Co., Ltd.) in accordance with JISR3257, the contact angle with water was measured on the surface of the surface-modified test piece by dropping a water droplet of approximately 1.0 μL thereon and measuring the contact angle using the θ/2 method after 0.01 seconds of liquid deposition. The contact angle with water was 27.3°.

(Adhesive Sticking)

An epoxy-based adhesive FM-300-2 (manufactured by SOLVAY) was applied to the portion (A) of the two surface-modified test pieces with a contact angle of 60° or less, so as to be 25 mm wide and 12.5 mm long, and heat-cured in a curing oven at 120°C for 60 minutes to obtain a molded plate bonded body formed of a fiber-reinforced composite article.

(Tensile Test)

In accordance with JISK 6850, the molded plate bonded body formed of the fiber-reinforced composite article was subjected to tensile testing under conditions of 5 mm/min using an Instron 4482 (manufactured by Instron Corporation) and the adhesive strength thereof was measured. The adhesive strength was 29.6 MPa. In addition, the following formula was used to calculate the adhesive strength. Adhesive strength [MPa] = load at bonded body fracture [N]/adhesive area [$mm^2$]

(Cohesion Failure Ratio)

After the tensile testing, the fracture surface was photographed and the photographed image was binarized using Image J image processing software to calculate the cohesion failure ratio at the adhesive. The following formula was used to calculate the cohesion failure ratio.

$$\text{Cohesion failure ratio } [\%] = \text{cohesion failure area } [\text{mm}^2]/\text{adhesive area } [\text{mm}^2]$$

(Example 2)

The contact angle with water, the tensile shear force, and the cohesion failure ratio were measured in the same manner as in Example 1 except that the plasma treatment conditions were set to an irradiation height of 5 mm and a substrate movement speed of 5 mm/sec. The properties of the molded plate formed of the fiber-reinforced composite article before plasma treatment are the same as in Example 1.

(Example 3)

The contact angle with water, the tensile shear force, and the cohesion failure ratio were measured in the same manner as in Example 1 except that different plasma treatments were carried out with respect to two test pieces, with an irradiation height of 5 mm and a substrate movement speed of 25 mm/sec and with an irradiation height of 10 mm and a substrate movement speed of 100 mm/sec, respectively, and storage was carried out in air for one week before sticking the adhesive and carrying out heating and curing. The properties of the molded plate formed of the fiber-reinforced composite article before plasma treatment are the same as in Example 1.

The contact angles with water immediately after plasma treatment were 18.7° at an irradiation height of 5 mm and a substrate movement speed of 25 mm/sec and 38.1° at an irradiation height of 10 mm and a substrate movement speed of 100 mm/sec and the contact angles after being stored for one week in air were 46.4° and 50.6°, respectively. The contact angle with water of the molded plate formed of a fiber-reinforced composite article was set to 48.5°, which was the average of the above.

(Example 4)

The contact angle with water, the tensile shear force, and the cohesion failure ratio were measured in the same manner as in Example 1 except that the blending ratio of the PEEK resin to the polyetherimide resin was changed to 80:20. The 90° bending strength of the molded plate formed of a fiber-reinforced composite article was 107 MPa, CAI was 329 MPa, G1c was 1.2 $kJ/m^2$, G2c was 1.5 $kJ/m^2$, and Tg (DMA, E'-onset) was 164°C.

(Example 5)

The contact angle with water, the tensile shear force, and the cohesion failure ratio were measured in the same manner as in Example 4 except that the plasma treatment conditions were set to an irradiation height of 10 mm and a substrate movement speed of 100 mm/sec and storage was carried out in air for one week before sticking the adhesive and carrying out heating and curing. The contact angle with water immediately after plasma treatment was 35.2° and the contact angles after one week of storage in air were 50.3° and 51.5°, respectively. The contact angle with water of the molded plate formed of fiber-reinforced composite article was 50.9°, which was the average of the above. The properties of the molded plate formed of the fiber-reinforced composite article before plasma treatment are the same as in Example 4.

(Example 6)

The contact angle with water, the tensile shear force, and the cohesion failure ratio were measured in the same manner as in Example 1 except that the blending ratio of the PEEK resin to the polyetherimide resin was changed to 94:6. The 90° bending strength of the molded plate formed of fiber-reinforced composite article was 168 MPa, CAI was 355 MPa, G1c was 1.4 $kJ/m^2$, G2c was 1.8 $kJ/m^2$, and Tg (DMA, E'-onset) was 164°C.

(Example 7)

The contact angle with water, the tensile shear force, and the cohesion failure ratio were measured in the same manner as in Example 1 except that the blending ratio of the PEEK resin to the polyetherimide resin was changed to 60:40. The 90° bending strength of the molded plate formed of a fiber-reinforced composite article was 105 MPa, CAI was 310 MPa, G1c was 1.3 $kJ/m^2$, G2c was 1.1 $kJ/m^2$, and Tg (DMA, E'-onset) was 172°C.

(Comparative Example 1)

The contact angle with water, the tensile shear force, and the cohesion failure ratio were measured in the same manner as in Example 1 except that the PEEK resin was changed to PEEK resin ZV7402 (manufactured by Polyplastics-Evonik Corporation), no polyetherimide resin was mixed therein, and a plasma treatment was not performed. The 90° bending strength of the molded plate formed of a fiber-reinforced composite article was 87 MPa, CAI was 262 MPa, and Tg (DMA, E'-onset) was 145°C.

(Comparative Example 2)

The contact angle with water, the tensile shear force, and the cohesion failure ratio were measured in the same manner as in Comparative Example 1 except that the plasma treatment conditions were set to an irradiation height of 5 mm and a substrate movement speed of 5 mm/sec. The properties of the molded plate formed of the fiber-reinforced composite article before plasma treatment are the same as in Comparative Example 1.

(Comparative Example 3)

The contact angle with water, the tensile shear force, and the cohesion failure ratio were measured in the same manner as in Example 1 except that a plasma treatment was not performed. The properties of the molded plate formed of the fiber-reinforced composite article before plasma treatment are the same as in Example 1.

(Comparative Example 4)

The contact angle with water, the tensile shear force, and the cohesion failure ratio were measured in the same manner as in Example 4 except that a plasma treatment was not performed. The properties of the molded plate formed of the fiber-reinforced composite article before plasma treatment are the same as in Example 4.

(Comparative Example 5)

The contact angle with water, the tensile shear force, and the cohesion failure ratio were measured in the same manner as in Example 1 except that the PEI resin was changed to Ultem 1000 (manufactured by SABle), no PEEK resin was mixed therein, and a plasma treatment was not performed. The 90° bending strength of the molded plate formed of a fiber-reinforced composite article was 104 MPa, CAI was 296 MPa, G1c was 0.84 $kJ/m^2$, G2c was 1.1 $kJ/m^2$, and Tg (DMA, E'-onset) was 212°C.

(Comparative Example 6)

The contact angle with water, the tensile shear force, and the cohesion failure ratio were measured in the same manner as in Comparative Example 5 except that a plasma treatment was not performed. The properties of the molded plate formed of the fiber-reinforced composite article before plasma treatment are the same as in Comparative Example 5.

The evaluation results of Examples 1 to 7 and Comparative Examples 1 to 6 are shown in Table 1 and Table 2.

As shown in Tables 1 and 2, for the form of the Examples, by suitably carrying out a plasma treatment on the fiber-reinforced composite material, the contact angle was reduced and, in tensile testing, cohesion failure within the adhesive was confirmed.

Comparative Examples 1, 3, and 4 had an interface failure between the fiber-reinforced composite material and the adhesive. In addition, in Comparative Example 2, the contact angle was reduced by carrying out a plasma treatment, but there was an interface failure and no improvement in adhesive strength was seen.

[Table 1]

| | | Example 1 | Example 2 | Example 3 | Example 4 | Example 5 | Example 6 | Example 7 |
|---|---|---|---|---|---|---|---|---|
| Substrate | PEEK | 90 | 90 | 90 | 80 | 80 | 94 | 60 |
| | PEI | 10 | 10 | 10 | 20 | 20 | 6 | 40 |
| Contact angle with water | | 27.3 | 9.6 | 48.5 | 42.8 | 50.9 | 11.9 | 21.1 |
| Cohesion failure ratio [%] | | 75.8 | 100 | 82.2 | 82.2 | 73 | 97.5 | 100 |
| Adhesive strength [MPa] | | 29.6 | 36.4 | 26.3 | 27 | 26.2 | 30 | 36.8 |

[Table 2]

| | | Comparative Example 1 | Comparative Example 2 | Comparative Example 3 | Comparative Example 4 | Comparative Example 5 | Comparative Example 6 |
|---|---|---|---|---|---|---|---|
| Substrate | PEEK | 100 | 100 | 90 | 80 | 0 | 0 |
| | PEI | 0 | 0 | 10 | 20 | 100 | 100 |
| Contact angle with water | | 93.4 | 33.4 | 87.2 | 87.9 | 92.6 | 11.4 |
| Cohesion failure ratio [%] | | 0 | 0 | 0 | 0 | 0 | 20 |
| Adhesive strength [MPa] | | 1.3 | 9.1 | 6.3 | 11.3 | 3.9 | 16.5 |

It is considered that hydrophilizing the fiber-reinforced composite material surface by a plasma treatment increases the affinity thereof with the adhesive. Increasing the affinity between the adherend and the adhesive makes it possible to develop stable adhesive strength and is thus a useful method for part design. By setting the surface of a fiber-reinforced composite material in which a specific combination of resins is blended to a specific contact angle, it is possible to improve the adhesive strength and to manufacture a bonded body with superior adhesive strength even with materials including polyaryl ketone resins, which are difficult to adhere to other parts.

[Industrial Applicability]

According to an aspect of the present invention, it is possible to provide a fiber-reinforced composite material with surface properties suitable for bonding. In addition, in particular, it is possible to provide a fiber-reinforced composite material with excellent adhesion to adherends of a fiber-reinforced composite article, a resin material, and a metal material, as well as a strongly adhered bonded body.

## Claims

1. A fiber-reinforced composite material comprising:

    a matrix resin; and
    reinforcing fibers,
    wherein the matrix resin includes a polyaryl ketone resin and a resin having a nitrogen atom in a repeating structural unit, and a surface of the fiber-reinforced composite material includes a portion in which a contact angle with water measured in accordance with JISR 3257 is 60° or less.

2. The fiber-reinforced composite material according to Claim 1,
wherein the resin having a nitrogen atom in a repeating structural unit comprises a polyetherimide resin.

3. The fiber-reinforced composite material according to Claim 1 or 2,
wherein the polyaryl ketone resin comprises a polyether ether ketone resin.

4. The fiber-reinforced composite material according to any one of Claims 1 to 3,
wherein the contact angle is 35° of less.

5. The fiber-reinforced composite material according to any one of Claims 1 to 4,
wherein a ratio of the polyaryl ketone resin to the resin having a nitrogen atom in a repeating structural unit is 4 or more and 32 or less as a mass ratio (polyaryl ketone resin/resin having a nitrogen atom in a repeating structural unit).

6. The fiber-reinforced composite material according to any one of Claims 1 to 5,
wherein a CAI strength of the fiber-reinforced composite material is 300 MPa or higher, G1c and G2c are each 1.0 $kJ/m^2$ or more, and Tg is 150°C or higher.

7. The fiber-reinforced composite material according to any one of Claims 1 to 6,
wherein the reinforcing fibers comprise carbon fibers.

8. The fiber-reinforced composite material according to any one of Claims 1 to 7,
wherein the fiber-reinforced composite material is a molded article.

9. A bonded body between a part 1 and a part 2, wherein the part 1 is formed of a fiber-reinforced composite article including carbon fibers and thermoplastic resin, the bonded body comprising:

    a bonding portion where the part 1 and the part 2 are bonded via an adhesive,
    wherein at least a part of a fracture surface at the bonding portion of the bonded body after tensile testing in accordance with JISK 6850 is a cohesion failure of the adhesive.

10. The bonded body according to Claim 9,
wherein the part 2 is formed of metal.

**11.** The bonded body according to Claim 10, wherein the bonding portion includes an epoxy-based adhesive.

**12.** The bonded body according to Claim 9, wherein the part 2 is formed of a fiber-reinforced composite article.

**13.** The bonded body according to Claim 12, wherein the bonding portion includes a urethane-based adhesive.

**14.** The bonded body according to Claim 9, wherein the part 2 is formed of a resin material.

**15.** The bonded body according to Claim 14, wherein the bonding portion includes an acrylic-based adhesive.

**16.** The bonded body according to any one of Claims 9 to 15, wherein the thermoplastic resin includes a polyaryl ketone resin.

**17.** A method for manufacturing a fiber-reinforced composite material including a polyaryl ketone resin, a polyetherimide resin, and reinforcing fibers, the method comprising:
carrying out a plasma treatment on a surface of the fiber-reinforced composite material.

**18.** The method for manufacturing a fiber-reinforced composite material according to Claim 17, wherein, in the plasma treatment, at least a part of the surface of the fiber-reinforced composite material is irradiated with plasma such that a contact angle with water is 60° or less.

**19.** A bonded body between a part 1 and a part 2 formed of a fiber-reinforced composite article including carbon fibers and thermoplastic resin, the bonded body comprising:

a bonding portion where the part 1 and the part 2 are bonded via an epoxy-based adhesive,
wherein an adhesive strength at the bonding portion is 25 MPa or higher.

**20.** A bonded body between a part 1 and a part 2 formed of a fiber-reinforced composite article including carbon fibers and thermoplastic resin, the bonded body comprising:

a bonding portion where the part 1 and the part 2 are bonded via an adhesive,
wherein a cohesion failure ratio of a fracture surface at the bonding portion of the bonded body after tensile testing in accordance with JISK 6850 is 70% or more.

## INTERNATIONAL SEARCH REPORT

International application No.
PCT/JP2021/011938

A. CLASSIFICATION OF SUBJECT MATTER
C08J 5/04(2006.01)i; B29C 65/54(2006.01)i; C08J 5/12(2006.01)i; C08J 7/00(2006.01)i; B29K 105/06(2006.01)n
FI: C08J5/04 CEZ; B29C65/54; C08J5/12 CFG; C08J7/00 306; B29K105:06
According to International Patent Classification (IPC) or to both national classification and IPC

B. FIELDS SEARCHED

Minimum documentation searched (classification system followed by classification symbols)
C08J5/04-5/12, 5/24, 7/00-7/02, 7/12-7/18; B29B11/16, 15/08-15/14; B29C65/00-65/82, 71/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2017/126361 A1 (THE YOKOHAMA RUBBER CO., LTD.) 27 July 2017 (2017-07-27) claims, paragraphs [0002], [0014]-[0017], [0033], [0036], [0039], examples | 9-16, 19, 20<br>1-8, 17, 18 |
| X<br>A | JP 2017-52127 A (MITSUBISHI RAYON CO., LTD.) 16 March 2017 (2017-03-16) claims, paragraphs [0014], [0015], [0017]-[0021], [0085]-[0088], [0091], examples | 9-16, 19, 20<br>1-8, 17, 18 |
| X<br>A | JP 2017-1341 A (NISSAN MOTOR CO., LTD.) 05 January 2017 (2017-01-05) claims, paragraphs [0001], [0031]-[0033], [0036]-[0038], examples | 9-16, 19, 20<br>1-8, 17, 18 |
| Y | JP 2002-212314 A (MITSUBISHI PLASTICS INC.) 31 July 2002 (2002-07-31) claims, paragraphs [0001], [0017], [0024], examples | 1-8, 17, 18 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 June 2021 (07.06.2021) | 15 June 2021 (15.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2021/011938

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | WO 2019/168009 A1 (MITSUBISHI CHEMICAL CORPORATION) 06 September 2019 (2019-09-06) claims, paragraph [0002], examples | 1-8, 17, 18 |
| Y | JP 63-80411 A (IMPERIAL CHEMICAL INDUSTRIES PLC) 11 April 1988 (1988-04-11) claims, page 7, upper left column, lines 5-17, examples 4, 5 | 1-8, 17, 18 |
| A | JP 2002-144436 A (MITSUBISHI PLASTICS INC.) 21 May 2002 (2002-05-21) claims | 1-20 |
| A | WO 2004/015011 A1 (MITSUBISHI PLASTICS INC.) 19 February 2004 (2004-02-19) claims | 1-20 |
| A | JP 2016-534172 A (SOLVAY SPECIALTY POLYMERS USA, LLC) 04 November 2016 (2016-11-04) entire text | 1-20 |
| A | JP 6-42302 A (NISSAN MOTOR CO., LTD.) 15 February 1994 (1994-02-15) entire text | 1-20 |
| A | WO 2006/006697 A1 (TOYOTA INDUSTRIES CORPORATION) 19 January 2006 (2006-01-19) entire text | 1-20 |
| A | JP 2019-188789 A (KANAZAWA INSTITUTE OF TECHNOLOGY) 31 October 2019 (2019-10-31) entire text | 1-20 |
| A | JP 2018-69658 A (NISSAN MOTOR CO., LTD.) 10 May 2018 (2018-05-10) claims, examples | 1-20 |
| A | JP 2020-6587 A (TOYOTA MOTOR CORP.) 16 January 2020 (2020-01-16) claims, examples | 1-20 |

Form PCT/ISA/210 (continuation of second sheet) (January 2015)

**INTERNATIONAL SEARCH REPORT**

International application No.
PCT/JP2021/011938

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**
Information on patent family members

International application No.
PCT/JP2021/011938

| Patent Documents referred in the Report | Publication Date | Patent Family | Publication Date |
|---|---|---|---|
| WO 2017/126361 A1 | 27 Jul. 2017 | US 2019/0030758 A1 claims, paragraphs [0002]-[0006], [0027]-[0032], [0086], [0096]-[0098], [0101], examples<br>JP 2017-128683 A<br>EP 3406659 A1<br>CN 108473701 A | |
| JP 2017-52127 A | 16 Mar. 2017 | (Family: none) | |
| JP 2017-1341 A | 05 Jan. 2017 | (Family: none) | |
| JP 2002-212314 A | 31 Jul. 2002 | US 2004/0096678 A1 claims, paragraphs [0001], [0028], [0042], examples<br>WO 2002/057343 A1<br>EP 1369450 A1<br>CN 1486341 A<br>KR 10-0823403 B1 | |
| WO 2019/168009 A1 | 06 Sep. 2019 | (Family: none) | |
| JP 63-80411 A | 11 Apr. 1988 | EP 254488 A2 claims, page 5, lines 19-25, examples 4, 5<br>GB 8617990 A | |
| JP 2002-144436 A | 21 May 2002 | (Family: none) | |
| WO 2004/015011 A1 | 19 Feb. 2004 | US 2006/0035093 A1 claims<br>EP 1550697 A1<br>CN 1649962 A | |
| JP 2016-534172 A | 04 Nov. 2016 | US 2016/0304716 A1<br>WO 2015/059216 A1<br>CN 105849199 A | |
| JP 6-42302 A | 15 Feb. 1994 | (Family: none) | |
| WO 2006/006697 A1 | 19 Jan. 2006 | EP 1785627 A1<br>US 2008/0248269 A1 | |
| JP 2019-188789 A | 31 Oct. 2019 | WO 2019/216182 A1 | |
| JP 2018-69658 A | 10 May 2018 | (Family: none) | |
| JP 2020-6587 A | 16 Jan. 2020 | (Family: none) | |

Form PCT/ISA/210 (patent family annex) (January 2015)

**INTERNATIONAL SEARCH REPORT**

International application No.
PCT/JP2021/011938

<Continuation of Box No. III>

(Invention 1) Claims 1-8, 17, and 18

Claims 1-8 have the special technical feature of a "fiber-reinforced composite material comprising a matrix resin and a reinforced fiber, wherein the matrix resin includes a polyarylketone resin and a resin having a nitrogen atom in a repeating structural unit, and the fiber-reinforced composite material includes parts in which a contact angle to water, measured according to JISR3257, on the surface of the fiber-reinforced composite material is 60° or less," and are thus classified as invention 1.

Claims 17 and 18 also have a technical feature corresponding to the special technical feature, and are thus classified as invention 1.

(Invention 2) Claims 9-16, 19, and 20

Claims 9-16, 19, and 20 relates to a "bonded body of a part 1 and a part 2 which are formed of a fiber-reinforced composite material including carbon fiber and a thermoplastic resin, the bonded body comprising a bonded part in which the part 1 and the part 2 are bonded by means of an adhesive, wherein the bonded part shows a particular adhesive state," and the common technical feature with invention 1 is clearly not a special technical feature, and thus claims 9-16, 19, and 20 cannot be classified as invention 1.

Therefore, claims 9-16, 19, and 20 are classified as invention 2.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020052238 A
- WO 2019168009 A
- JP 2019188789 A